# EUROPÄISCHE PATENTSCHRIFT

(11) **EP 3 057 707 B1**
(45) Veröffentlichungstag und Bekanntmachung des Hinweises auf die Patenterteilung: **07.11.2018**
(21) Anmeldenummer: 14761992.8
(22) Anmeldetag: 10.09.2014
(51) Int. Cl.: G01N 30/60, B01L 9/00, G01D 11/30, B01L 3/00

(54) **MESSANORDNUNG MIT EINEM TRÄGERELEMENT UND EINEM SENSOR**
MEASUREMENT ARRANGEMENT HAVING A CARRIER ELEMENT AND HAVING A SENSOR
ENSEMBLE DE MESURE MUNI D'UN ÉLÉMENT DE SUPPORT ET D'UN CAPTEUR

(30) Priorität: 18.10.2013 DE 102013017317
(43) Veröffentlichungstag der Anmeldung: 24.08.2016
(73) Patentinhaber: Endress+Hauser Flowtec AG, 4153 Reinach (CH)
(72) Erfinder: HUBER, Christof, CH-3007 Bern (CH); FETH, Hagen, 79106 Freiburg (DE); STEINHOFF, Frank, 79219 Staufen im Breisgau (DE); REINECKE, Holger, 79110 Freiburg (DE)
(74) Vertreter: Andres, Angelika Maria
(86) Internationale Anmeldenummer: PCT/EP2014/069265
(87) Internationale Veröffentlichungsnummer: WO 2015/055353

(56) Entgegenhaltungen:
- WO-A1-2014/095115
- US-A1- 2005 257 885
- US-A1- 2007 166 497
- US-A1- 2012 061 239
- US-A1- 2013 228 950

## Beschreibung

Die vorliegende Erfindung betrifft eine Messanordnung umfassend ein Trägerelement und einen Sensor nach dem Oberbegriff des Anspruchs 1 oder 2.

Eine gattungsgemäße Messanordnung eines Trägerelements mit einem mikromechanischen Sensor wird in der DE 10 2011 119 472 B3 offenbart. Diese Messanordnung weist insbesondere in Fig.1 eine Verbindung zwischen dem Trägerelement und dem mikromechanischen Sensor auf, welche durch Lötungen geschaffen wird. Die DE 10 2011 119 472 B3 offenbart zudem, dass die als Chiphalterung bezeichneten Lötungen zudem mit einer zu- und/oder abführenden Leitung versehen sind. Lötverbindungen haben allerdings den Nachteil, dass sie gegenüber einigen Fluiden nicht hinreichend beständig sind. Dies betrifft insbesondere chlorhaltige Fluide, welche durch Metallkomplexierung die metallische Lotverbindung angreifen können.

Es ist daher Aufgabe der vorliegenden Erfindung ausgehend von der gattungsgemäßen DE 10 2011 119 472 B3 eine alternative Verbindung zwischen einem Trägerelement und einem mikromechanischen Sensor zu schaffen.

Die vorliegende Erfindung löst diese Aufgabe mit den Merkmalen des Anspruchs 1.

Eine nicht erfindungsgemäße Messanordnung umfasst :
a) ein Trägerelement mit einer Längsachse A auf welchem ein Sensor zur Ermittlung einer Prozessgröße eines gasförmigen oder flüssigen Fluids angeordnet ist, und
b) den Sensor
   wobei der Sensor einen Fluidkanal aufweist, welcher sich innerhalb des Sensors von einem Fluideinlass bis zu einem Fluidauslass erstreckt, und
wobei das Trägerelement zumindest einen Fluidkanal aufweist,
wobei das Trägerelement zur mechanischen Verbindung des Fluidkanals des Trägerelements mit dem Fluidkanal des Sensors eine Anbindungsschicht aufweist, die sich über einen Teilbereich einer Oberfläche des Trägerelements und über einen Teilbereich einer Oberfläche des Sensors erstreckt, wobei die Anbindungsschicht zumindest eine fluorierte Kunststoffverbindung aufweist.

Die fluorierte Kunststoffverbindung ermöglicht eine alternative Anbindung des Sensors an das Trägerelement. Sie zeichnet sich u.a. durch eine hohe chemische Beständigkeit gegenüber einer Vielzahl von Fluiden aus. Bei der fluorierten Kunststoffverbindung handelt es sich insbesondere um einen thermoplastische oder thermoelastische Kunststoffverbindung. Die Anbindungsschicht bildet dabei vorzugsweise eine fluidleitende Verbindung zwischen Trägerelement und Sensor aus, so dass das Fluid vom Fluidkanal des Trägerelements zum Fluidkanal des Sensors übertragen werden kann.

Die erfindungsgemäße Messanordnung umfasst
a) ein Trägerelement mit einer Längsachse A auf welchem ein Sensor zur Ermittlung einer Prozessgröße eines gasförmigen oder flüssigen Fluids angeordnet ist, und
b) den Sensor
wobei der Sensor einen Fluidkanal aufweist, welcher sich innerhalb des Sensors von einem Fluideinlass bis zu einem Fluidauslass erstreckt, und
wobei das Trägerelement ein Fluidkanal aufweist und
wobei das Trägerelement zur Verbindung des Fluidkanals des Trägerelements mit dem Fluidkanal des Sensors jeweils zumindest ein Anschlusselement aufweist, welches senkrecht zur Längsachse A aus dem Trägerelement hervorsteht und welches in den Fluidkanal des Sensors hineinragt und wobei das Anschlusselement mittels einer Anbindungsschicht zumindest am Sensor festgelegt ist, und
wobei diese mechanische Anbindungsschicht eine fluorierte Kunststoffverbindung aufweist.

Durch die erfindungsgemäße Messanordnung wird eine fluidleitende Verbindung vom Trägerelement zum Sensor erreicht, welcher gegenüber einer herkömmlichen Verbindung ein definierteres Totvolumen aufweist.

Dabei wird der Sensor mit jeweils einem Anschlusselement mittels einer Anbindungsschicht aus einer thermoplastischen Kunststoffverbindung mechanisch verbunden.

Vorteilhafte Ausgestaltungen der Erfindung sind Gegenstand der Unteransprüche.

Es ist von Vorteil, wenn das Anschlusselement einstückig mit dem Trägerelement verbunden ist. Ein besonders bevorzugtes einstückig-ausgeformtes Anschlusselement kann mittels eines Urformverfahrens, vorzugsweise mittels Kaltverformung wie z.B. durch ein sogenanntes Drückrollverfahren oder durch ein spanendes Verfahren erreicht werden, wie es aus dem Fahrzeugbau (z.B. der DE 10 2006 011 021 A1) bekannt ist.

Alternativ kann das Anschlusselement vorteilhaft als ein rohrförmiges Bauteil ausgebildet sein, welches in dem Fluidkanal des Trägerelements angeordnet ist. Das Anschlusselement kann in diesem Fall zur mechanischen Anbindung des Anschlusselements an das Trägerelement an einer Austrittsöffnung des Fluidkanals ebenfalls eine Anbindungsschicht aus dem besagten Kunststoffmaterial aufweisen. Dadurch wird eine verbesserte Druckstabilität der Anbindung des Anschlusselements an das Trägerelement erreicht. Insgesamt weist somit der Übergang zwischen Sensor, Anschlusselement und Trägerelement vorzugsweise eine einheitliche Anbindungsschicht auf.

Im Fall dass das Anschlusselement und das Trägerelement integral einstückig ausgebildet sind, empfiehlt sich eine Anbindungsschicht lediglich zwischen dem Sensor und dem Anschlusselement.

Die thermoplastische Kunststoffverbindung ist vorzugsweise eine Copolymerverbindung mit zumindest einer polyfluoriertem Polymerkomponente. Die Copolymerverbindung besteht insbesondere aus Chlortrifluorethylen und Ethylen und besonders besonders bevorzugt ist das Copolymer ein 1:1 Copolymer aus Chlortrifluorethylen und Ethylen. Dabei kann es sich bei der Copolymerverbindung um die Verbindung Halar ECTFE von Solvay Solexis handeln.

Neben der Copolymerverbindung können in der Anbindungsschicht noch weitere Substanzen eingebunden sein, so z.B. Antioxidantien und UV-Stabilisatoren, welche die Langzeitbeständigkeit der Anbindungsschicht gegenüber Umwelteinflüssen weiter erhöht. Zudem können leitfähige Materialien eingebunden sein um ggf. eine elektrische Kontaktierung zwischen Sensor und Trägerelement zu ermöglichen.

Zusätzlich oder alternativ können auch wärmeleitfähigen Materialien, welche die Wärmeleitfähigkeit des Kunststoffes erhöhen, in den Kunststoff eingebunden werden um eine thermische Kontaktierung zwischen dem Trägerelement und dem Sensor zu ermöglichen.

Zusätzlich oder alternativ können auch magnetische Substanzen in den Kunststoff eingebunden werden, um die magnetische Kontaktierung zwischen Sensor und Trägerelement zu ermöglichen. Entsprechende magnetische Substanzen können z.B. Partikel aus Magneteisenstein sein.

Die Anbindungsschicht enthält in einer bevorzugten Ausführungsvariante jedoch zumindest zu 80 Gew.%, vorzugsweise mehr als 90 Gew.%, der Copolymerverbindung, wobei bei diesen Angaben Gewichtsanteile von eventuellen Füllstoffen nicht berücksichtigt sind.

In der Anpassungsschicht können neben der Kunststoffverbindung zusätzlich auch die besagten Füllstoffe, z.B. als partikuläre Füllstoffe wie Calciumcarbonat oder Russ enthalten sein. Diese können bis zur Ausfällungsgrenze dem Kunststoff zugegeben werden.

Das Trägerelement kann zudem ein Anschlusselement zur Übertragung des Fluids vom Trägerelement in den Sensor aufweisen, welches zumindest bereichsweise an seinem Außenumfang die Anbindungsschicht aufweist. Das heißt dass die Anbindungsschicht in diesem Fall die mechanische Anbindung des Anschlusselements an das Messrohr übernimmt. Zugleich kann es den Übergang zwischen Anschlusselement und Sensor abdichten. Das Anschlusselement kann aus einem korrosionsbeständigen Metall, vorzugsweise Stahl, insbesondere Edelstahl sein. Besonders bevorzugt ist dabei Edelstahl der Sorte PH 17-4. Dieses Material ist einerseits korrosionsfest und andererseits weist es einen an das Sensormaterial angepassten thermischen Ausdehnungskoeffizienten auf.

Idealerweise beträgt der thermische Ausdehnungskoeffizient des Materials des Trägerelements vorteilhaft weniger als das 7-fache, vorzugsweise weniger als das 5-fache des thermischen Ausdehnungskoeffizienten des Materials des Sensors. Gleiches gilt für das optionale Anschlusselement.

Zwischen dem Sensor und dem Trägerelement sind vorteilhaft weitere stoffschlüssige Verbindungen zur zusätzlichen Stabilisierung angeordnet, welche mittels der fluorierten Kunststoffverbindung ausgebildet sind. Alternativ kann auch eine Lotverbindung an dieser nicht-fluidberührenden Stelle eingesetzt werden.

Sofern anstelle einer Direktanbindung zwischen Sensor und Trägerelement mittels der Anbindungsschicht ein Anschlusselement genutzt wird, so kann dieses vorteilhaft mittels eines Urformverfahrens aus dem Trägerelement ausgeformt sein.

Alternativ kann das Anschlusselement auch als ein rohrförmiges Bauteil ausgebildet sein, welches in dem Fluidkanal des Trägerelements angeordnet ist. Dies ist insbesondere dann von Vorteil, wenn der Abstand zwischen Sensor und Trägerelement je nach Dimensionierung der Messanordnung variabel gestaltet werden soll.

Es ist von Vorteil, wenn der Fluidkanal des Trägerelements mit der fluorierten Kunststoffverbindung ausgekleidet ist. Somit ist nicht nur der Bereich der Überleitung zum Sensor, sondern das Material des Trägerelements insgesamt durch die Kunststoffschicht vor dem direkten Kontakt mit dem Medium geschützt.

Die Anbindungsschicht kann bei der optionalen Verwendung eines Anschlusselements entweder nur zwischen Sensor und Anschlusselement oder zwischen Sensor, Anschlusselement und Trägerelement vorgesehen sein und kann zusätzlich in seiner mechanischen Festigkeit durch eine Lotverbindung verstärkt werden.

Besonders von Vorteil ist es, wenn die vorgenannten stoffschlüssigen Verbindungen möglichst gleichmäßig im Bereich zwischen dem Sensor und dem Trägerelement verteilt sind. Daher ist es von Vorteil, wenn die dem Trägerelement zugewandte Oberfläche des Sensors in zumindest drei gleich-dimensionierte Sensorabschnitte einteilbar ist, wobei zumindest zwei der drei Sensorabschnitte zumindest jeweils eine der stoffschlüssigen Verbindungen aufweist.

Die Erfindung wird anhand der nachfolgenden Zeichnungen näher erläutert. Es zeigt:
Fig. 1: eine Schnittansicht eines Trägerelements einer ersten Messanordnung;
Fig. 2: schematische Schnittansicht der Messanordnung;
Fig. 3: schematische Schnittansicht der Messanordnung in der Perspektive;
Fig. 4: schematische Darstellung des Trägerelements der Messanordnung mit einer Anbindungsschicht aus einem fluoriertem Kunststoff;
Fig. 5: schematische Darstellung einer zweiten Messanordnung; und
Fig. 6 schematische Anordnung einer dritten Messanordnung.

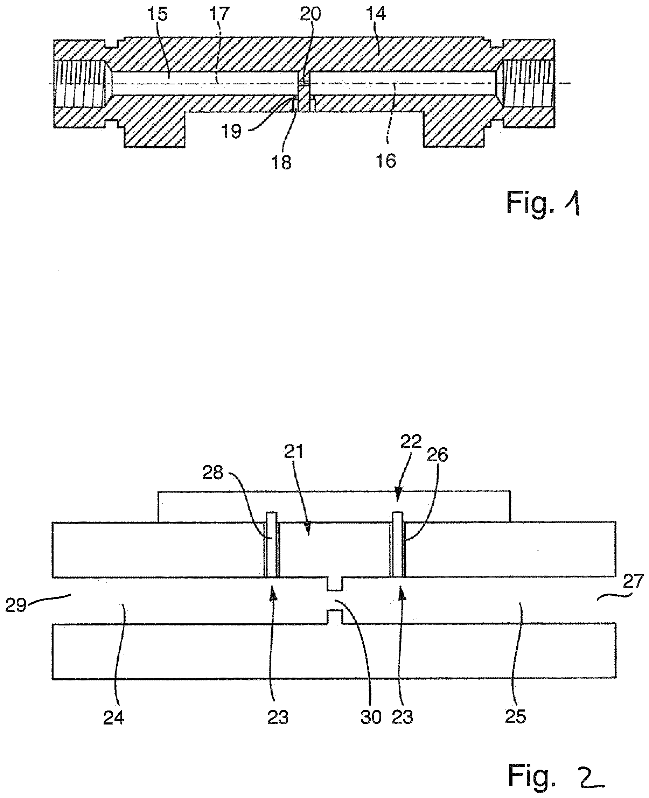

Die in Fig. 1-5 dargestellten Messanordnungen werden vorzugsweise in Messgeräten der Prozess- und Automatisierungstechnik eingesetzt.

Die vorliegende Erfindung betrifft die Anbindung von einem Sensor an ein Trägerelement. Diese Sensoren werden in den nachfolgenden Ausführungsbeispielen als mikromechanische Sensoren beschrieben. Die Erfindung ist allerdings nicht auf mikromechanische Sensoren beschränkt.

Die Grundfläche eines bevorzugten Sensors kann bevorzugt der maximalen Grundfläche eines Wafers entsprechen. Als Grundfläche ist dabei die Fläche zu verstehen, mit welcher der Sensor mit dem Trägerelement verbunden werden kann.

Besonders bevorzugt ist zumindest eine Kantenlänge des Sensors kleiner oder gleich 10cm. Ganz besonders bevorzugt sind alle Kantenlängen des Sensors kleiner oder gleich 10cm.

Fig. 1 zeigt ein Ausführungsbeispiel eines Sensor, der als beispielsweise als ein Sensor für ein Coriolis-Massendurchflussmessgerät in mikromechanischer Bauweise (MEMS - Micro-Electro-Mechanical-System) ausgebildet ist.

Fig. 1 zeigt ein entsprechendes Trägerelement 14 mit einer Längsachse A auf welchem ein mikromechanischer Sensor zur Ermittlung einer Prozessgröße eines gasförmigen oder flüssigen Fluids angeordnet werden kann.

Diese Prozessgröße kann vorzugsweise die Dichte, die Viskosität, die Stoffzusammensetzung, der Volumendurchfluss, der Massendurchfluss, die Temperatur und/oder die Durchflussgeschwindigkeit eines Fluids sein.

Das Trägerelement 14 weist Fluidkanal auf, der einen Fluidzuführkanal 15 und einen Fluidabführkanal 16 aufweist. Der Fluidzuführkanal 15 ist zur Zuführung des Fluids zum Sensor auf. vorgesehen Fluidzuführkanal weist in dem in Fig. 1 dargestellten Ausführungsbeispiel einen erstes Kanalsegment 17 auf, welches im Wesentlichen parallel zur Längsachse A des Trägerelements 14 verläuft. Dieses Kanalsegment ist endständig mit einem Prozessanschluss einer Rohrleitung verbindbar. Der Fluidzuführkanal weist zudem ein zweites Kanalsegment 18, in welches das erste Kanalsegment 17 mündet. Dieses zweite Kanalsegment 18 ist im vorliegenden Ausführungsbeispiel im Winkel von 90° zur Längsachse im Trägerelement 14 angeordnet. Dabei ist der Durchmesser des ersten Kanalsegments 17 größer, vorzugsweise zumindest doppelt so groß, wie der Durchmesser des zweiten Kanalsegments 18. Das zweite Kanalsegment 18 weist eine Durchmesseraufweitung 19 zur Aufnahme eines Abschlusselements auf. Dadurch erfolgt nach dem Einsetzen des Anschlusselements kein Nennweitensprung innerhalb des zweiten Kanalsegments 18. Durch das zweite Kanalsegment 18 kann das Fluid radial zur Achse aus dem Trägerelement herausgeleitet werden.

Das Trägerelement 14 weist zudem einen Fluidabführkanal 16 auf, welcher im Wesentlichen baugleich zum Fluidzuführkanal 15 aufgebaut ist. Zwischen dem Fluidabführkanal und dem Fluidzuführkanal kann optional ein Kanalverbindungssegment 20 angeordnet sein, welches im Trägerelement 14 parallel zur Längsachse A angeordnet ist und den Fluidzuführkanal und den Fluidabführkanal miteinander verbindet. Somit muss nicht der gesamte Fluidstrom durch den mikromechanischen Sensor geleitet werden, sondern nur ein Teil des Fluids. Die Nennweite des Kanalverbindungssegments weist dabei einen kleineren Durchmesser, vorzugsweise zumindest einen doppelt so kleinen Durchmesser auf wie das erste Kanalsegment 17.

Fig. 2 gibt einen schematischen Aufbau einer ersten Messanordnung 31 wieder. Eine erfindungsgemäße Messanordnung umfasst zumindest ein Trägerelement 21, einen mikromechanischen Sensor 22 und Anschlusselemente 23, welche das Trägerelement 21 und den Sensor 22 miteinander verbinden, derart, dass das Anschlusselement 23 in den mikromechanischen Sensor 22, respektive in einen darin angeordneten Fluidkanal, hineinragt.

Sensoren, insbesondere mikromechanische Sensoren, wie sie im vorliegenden Beispiel eingesetzt werden können, sind an sich bekannt. Die im vorliegenden Beispiel eingesetzten Sensoren können als Coriolis-Durchflussmessgerät, als magnetischinduktives Durchflussmessgerät, als thermisches Durchflussmessgerät, als Druckmessgerät, als Viskositätsmessgerät spektroskopische Messgeräte, Ultraschallmessgeräte, insbesondere Ultraschall-Durchflussmessgerät, Dichtemessgeräteausgebildet sein und Prozessgrößen wie Viskosität, Dichte, Druck, Stoffzusammensetzung, Temperatur, Viskosität und ggf. auch Durchfluss ermittelt. Unter Sensoren sind im Rahmen der vorliegenden Erfindung auch chromatographische Analysatoren (LC- oder GC-Analysatoren) zu verstehen.

Das Trägerelement 21 weist einen Fluidzuführkanal 24 und einen Fluidabführkanal 25 auf. Diese weisen jeweils ein erstes Kanalsegment 27, 29 parallel zur Längsachse A auf und ein zweites Kanalsegment 26 und 28, welches sich radial zur Längsachse durch das Trägerelement 21 erstreckt. Auch in dem in Fig. 10 aufgeführten Ausführungsbeispiel ist zwischen den jeweils ersten Kanalsegmenten 27 und 29 des Fluidzuführkanals 24 und des Fluidabführkanals 25 ein Kanalverbindungssegment 30 angeordnet.

Im Unterschied zu Fig. 1 weist das Trägerelement 21 keine Durchmesser-aufweitung 19 auf. Vielmehr sind die Anschlusselemente 23 vollständig in die zweiten Kanalsegmente 26 oder 28 eingesetzt.

Der Sensor ist vorzugsweise aus einem Glas oder Siliziummaterial gefertigt. Typischerweise beträgt der Temperaturausdehnungskoeffizient bei diesen Materialien etwa 3*10⁻⁶ K⁻¹. Alternativ sind auch Sensoren aus keramischen Materialien für diesen Einsatzzweck verwendbar. Die Anschlusselemente 23 sind entweder als gesonderte Bauteile in Form von Röhrchen ausgebildet oder integral ausgeformt, wie dies in Fig. 13 näher erläutert wird. Sie bestehen vorzugsweise aus Edelstahl - vorzugsweise der Sorte PH 17-4. Andere Materialien, beispielsweise aus Kunststoffmaterialien, sind allerdings ebenfalls denkbar. Gerade bei besonders heißen oder kalten Fluiden ist es jedoch von Vorteil, wenn der thermische Ausdehnungskoeffizient des Materials des Sensors und des Anschlusselements um nicht mehr als das 5-fache voneinander abweichen. Andernfalls kann es zu Undichtigkeiten bei höheren Drücken oder sogar zu einem Ablösen des Sensors kommen. Edelstahl der Sorte PH 17-4 erfüllt diese Anforderungen bezüglich eines Siliziummaterials und/oder Glasmaterials (incl. Borsilikat). Sofern die Anschlusselemente integral mit dem Trägerelement ausgebildet sind sollte das Material des Trägerelements naturgemäß dem Material der Anschlusselemente entsprechen. Sofern jedoch die Anschlusselemente 23 als gesonderte Bauteile im Trägerelement 21 vorgesehen sind, so kann das Material des Trägerelements vorzugsweise aus einem kostengünstigeren Material, beispielsweise Edelstahl der Sorte 316 L ausgewählt werden. Alternativ kann auch anderes Material, insbesondere Titan Zirkon, Tantal, Silizium oder leitendes Keramikmaterial für das Trägerelement und/oder das Anschlusselement eingesetzt werden.

In einer besonderen Ausführungsvariante besteht eine Innenbeschichtung des Anschlusselements oder das Anschlusselement insgesamt aus einem Kunststoff ausgewählt aus folgenden Stoffen: PE, PEEK, PFA, PTFE, PBT PEK oder - besonders bevorzugt aus einer Copolymerverbindung ein 1:1 Copolymer aus Chlortrifluorethylen und Ethylen, insbesondere aus Halar ECTFE von Solvay Solexis. Dies hat besondere Vorteile seitens der Prozessführung des Aufbringens. Es hat unter anderem gegenüber einer gelöteten Verbindung bessere Oberflächenbenetzung und Anhaftung auf der Oberfläche des Sensors und ist chemisch beständiger gegenüber chlorhaltigen Verbindungen. Beispielsweise bei der Messung von chlorhaltigen Verbindungen ist es zudem von Vorteil, wenn auch Fluidzuführkanal und der Fluidabführkanal mit der vorgenannten Copolymerverbindung ein 1:1 Copolymer aus Chlortrifluorethylen und Ethylen, insbesondere aus Halar ECTFE von Solvay Solexis ausgekleidet ist.

Zwischen dem Trägerelement und dem Anschlusselement und dem Trägerelement und dem Sensor kann zudem vorteilhaft eine Vordichtung in Form einer Membranstruktur oder einer Dichtlippe angeordnet sein, so dass die Anbindungsschicht mechanisch oder chemisch nicht übermäßig beansprucht wird.

Es empfiehlt sich vor dem Auftrag der Anbindungsschicht die zu verbindenden Oberflächen zu behandeln, um ein besseres Anhaften zu ermöglichen. Dies kann chemisch durch Anätzen erfolgen oder durch Coronabestrahlen oder Lasern oder durch abrasive Verfahren wie z.B. Sandstrahlen. Die behandelten Oberflächen können sodann durch die thermoplastische Kunststoffverbindung besser benetzt werden.

Die Anschlusselemente 23 ermöglichen insbesondere einen strömungstechnischen Anschluss zwischen mikromechanischem Sensor 22 und dem Trägerelement 21. Allerdings empfiehlt sich, insbesondere bei höheren Drücken, eine zusätzliche mechanische Anbindung des mikromechanischen Sensors 22.

In der schematischen Darstellung der Fig. 2 ist nicht gezeigt, wie die mechanische Anbindung des mikromechanischen Sensors 22 an das Trägerelement 21 erfolgt.

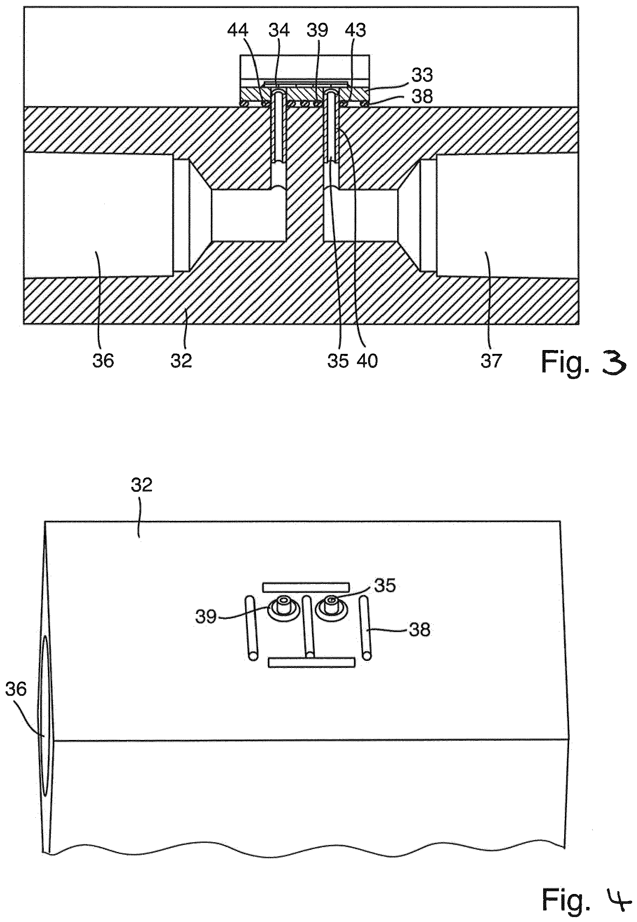

Eine Variante der mechanischen Anbindung wird in den Fig. 3 und 4 näher erläutert. Fig. 3 und 4 zeigen in Analogie zur Fig. 2 ein Trägerelement 32 mit einem Fluidzuführkanal 36 und einem Fluidabführkanal 37. In diesen Kanälen 36 und 37 sind jeweils Anschlusselemente 35 angeordnet. Fig. 3 zeigt zudem einen mikromechanischen Sensor 33 mit einem darin angeordneten Fluidkanal 34, welcher sich von einem Fluideinlass 44 bis zu einem Fluidauslass 43 erstreckt und in welchen die Anschlusselemente 35 hineinragen.

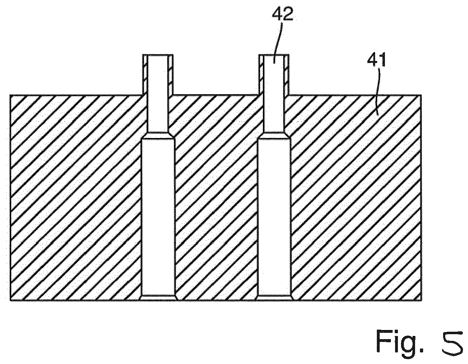

Die mechanische Anbindung des mikromechanischen Sensors erfolgt im Ausführungsbeispiel der Fig. 3 und 4 mittels einer Anbindungsschicht. Diese Anbindungsschicht aus fluoriertem Kunststoff kann in Fig. 3 und 5 in materialsparender Weise mittels einer Auftragsmaske gezielt auf die Oberfläche des Trägerelements und/oder des Sensors aufgetragen werden.

In den Fig. 1-5 sind jeweils Anschlusselemente zwischen dem Sensor und dem Trägerelement dargestellt. Es ist jedoch auch eine Ausführungsvariante vom Gegenstand der vorliegenden Erfindung erfasst, in welchem der Sensor und das Trägerelement direkt mittels der vorgenannten Copolymerverbindung miteinander verbunden sind. Hierbei können die Anschlusselemente entfallen.

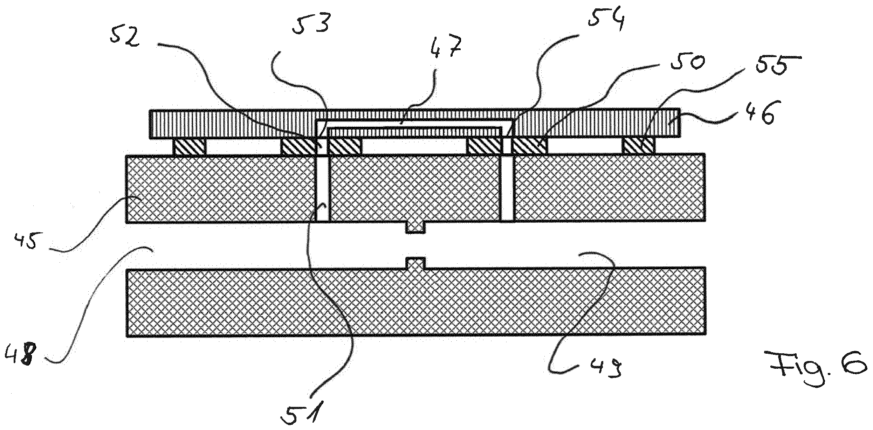

Fig. 6 zeigt eine dritte Variante einer Messanordnung umfassend ein Trägerelement 45 und einen Sensor 46, welcher einen Fluidkanal 47 mit einem Fluideinlass 53 und einem Fluidauslass 54 aufweist.

Der Fluidkanal des Trägerelements unterteilt sich -wie in den vorhergehenden Beispielen - in einen Fluidzuführkanal 48 und in einen Fluidabführkanal 49. Analog zu den vorhergehenden Ausführungsbeispielen unterteilt sich der Fluidzuführ- und -abführkanal in zwei Kanalsegmente, ein erstes und ein zweites Kanalsegment, auf. Dabei weist das zweite Kanalsegment 51 jedoch kein Anschlusselement sondern eine mechanische Anbindungsschicht 55 auf. Diese mechanische Anbindungsschicht 55 zwischen dem Trägerelement 45 und dem Sensor 46 ist als eine fluorierte Kunststoffverbindung 55 in Form eines Copolymers ausgebildet. Diese weist eine fluidleitende Verbindung 52 auf, welche den Fluidkanal 47 des Sensors 46 und den Fluidkanal des Trägerelements 45 verbindet.

Zwischen dem Sensor 46 und dem Trägerelement 45 sind weitere Verbindungen 55 angeordnet, welche eine verbesserte mechanische Anbindung des Sensors an das Trägerelement ermöglichen

Die in Fig. 1-6 dargestellte fluidleitende Verbindung, welche entweder durch das Anschlusselement oder durch die mechanische Anbindungsschicht selbst bereitgestellt wird, weist vorzugsweise eine Querschnittsfläche von weniger als 1000 mm², besonders bevorzugt 100 mm² und insbesondere 20mm² auf.

Eine bevorzugte Schichtdicke der Anbindungsschicht beträgt weniger als 1mm, vorzugsweise weniger als 200 µm und besonders bevorzugt weniger als 100µm. Eine besonders bevorzugte Schichtdicke der mechanischen Anbindungsschicht liegt im Bereich zwischen 100nm und 100µm,

Zusätzlich zu der mechanischen Anbindungsschicht können in den Ausführungsbeispielen der Fig. 1-6 auch Lötringe und Lötdrähte, gestanzte Metallfolien, insbesondere Gold und/oder Zinnfolien, und/oder eine elektrochemisch-abgeschiedene Schicht oder Schichten zur mechanischen Anbindungsschicht, insbesondere eine Goldschicht, für eine sichere Anbindung sorgen und zur Kunststoffschicht ergänzt werden. Der Kunststoff bzw. das Copolymer kann zudem mittels einer Schablone auf das Trägermaterial aufgebracht werden. Alternativ jedoch weniger bevorzugt zu Goldmaterial kann auch Zinnmaterial für die Ausbildung Verbindungen genutzt werden.

Als Lotmaterial eignet sich besonders bevorzugt ein Edelmetall, z.B. Silber oder Gold oder edelmetallhaltige Legierungen. So sind beispielsweise auch eutektische Gemische aus Silber und Zinn einsetzbar. Die Schrumpfung dieser Materialien beträgt dabei vorzugsweise weniger als 1 Vol.%.

Verbindungen, welche die elektrische, thermische und/oder magnetische Leitfähigkeit der Anbindungsschicht verbessern, können dem fluoriertem Kunststoff zugesetzt werden. Alternativ oder zusätzlich können auch Verbindungen, welche eine bessere Wärmeausdehnungsanpassung zwischen den Materialien des Trägerelements und des Sensors ermöglichen, dem Kunststoff zugesetzt werden.

Verbindung zur Verbesserung der elektrischen Leitfähigkeit sind bevorzugt lötfähige und zugleich leitfähige Verbindungen, wie die bereits zuvor genannten Verbindungen,

Verbindungen welche die thermische Leitfähgikeit verbessern können beispielsweise Siliziumcarbid und/oder Aluminiumnitrid sein.
Verbindungen, welche eine bessere Wärneausdehnungsanpassung ermöglichen können vorzugsweise Korund und/oder Aluminiumoxid sein.

Verbindungen welche die magnetische Leitfähigkeit verbessern können beispielsweise Magneteisenstein oder magnetisierbare Metalle oder Metalllegierungen sein.

Dabei ist es von Vorteil, wenn die Anbindungsschicht aus fluoriertem Kunststoff geringer als 1/5 mm, vorzugsweise geringer als 1/10 mm ist.

In einer besonderen Ausführungsvariante kann die mechanische Anbindungsschicht transparent ausgebildet sein, derart, dass optische Bauteile, z.B. optische Sensoren, an die mechanische Anbindungsschicht angeschlossen werden können, wobei die Anbindungsschicht als Lichtleiter ausgebildet ist. Hierzu kann die Anbindungsschicht auf zusätzliche optische Funktionsmaterialien umfassen.

Die vorgenannte mechanische Anbindungsschicht 38 und 39 ist in Fig. 4 und 5 dargestellt. Dabei ist die mechanische Anbindungsschicht 38 im Bereich der Anschlusselemente zur Überleitung des Fluids vom Trägerelement zum Sensor angeordnet. Optional ist die Anbindungsschicht 39 auch in Form von Verbindungspunkten in nicht-mediumsberührenden Bereichen zwischen dem Sensor und dem Trägerelement angeordnet. Wie man daher erkennt, muss diese Anbindungsschicht nicht durchgehend die Oberfläche des Trägermaterials oder des Sensors benetzen, sondern kann auch lediglich an einigen Verbindungspunkten zwischen den beiden Bauteilen vorgesehen sein.

Die mechanische Anbindungsschicht kann in vielfältiger Weise auf das Trägerelement und/oder auf den Sensor aufgebracht werden. Dies kann insbesondere mittels elektrostatischer Beschichtung, Pulverbeschichtung, Pulverspritzen oder, in gelöster Form, als sogenanntes Dip-Coating erfolgen.

Nachfolgend wird ein besonders bevorzugtes Ausführungsbeispiel eines Verfahrens zur Herstellung einer mechanischen Verbindung zwischen dem Trägerelement, dem oder den Anschlusselementen und/oder dem Sensor mittels der fluorierten Kunststoffverbindung näher beschrieben werden.

Fig. 6 zeigt ein weiteres Ausführungsbeispiel einer erfindungsgemäßen Messanordnung, wobei bei dieser Anordnung keine zusätzlichen Anschlusselemente verwendet werden.

Dabei ist ein Trägerelement 45 mit einem Sensor 46 vermittels einer mechanischen Anbindungsschicht 50 verbunden. Der Sensor 46 weist einen Fluidkanal 47 mit einem Fluideinlass 53 und einem Fluidauslass 54 auf.

Das Trägerelement 45 weist einen Fluidkanal auf, welcher sich in einen Fluidzuführkanal 48 und einen Fluidabführkanal 49 aufteilt und ein erstes Kanalsegment und ein zweites Kanalsegment 51.

Die mechanische Anbindungsschicht 50 zwischen dem Trägerelement 45 und dem Sensor 46 besteht vorzugsweise aus einem fluorierten Copolymer und verbindet den Fluidkanal 47 des Sensors 45 mit dem Fluidkanal des Trägerelements 45. Hierzu weist die Anbindungsschicht 50 eine fluidleitende Verbindung 52 auf, welche als eine lochförmige Aussparung in der Anbindungsschicht ausgestaltet ist. Durch diese Aussparung kann ein Fluid verlustfrei vom Trägerelement zum Sensor und zurück überführt werden.

Das fluorierte Kunststoffmaterial kann auch noch an weiteren Stellen eine mechanische Verbindung 55 zwischen dem Sensor und dem Trägerelement ausbilden.

Die Schritte des Herstellungsverfahren bestehen darin, dass durch Abscheiden einer Polymerschicht der fluorierten Kunststoffverbindung im Bereich der Austrittsöffnungen des Fluidkanals des Trägerelements eine Verbindungsschicht zu den Anschlusselementen (Röhrchen) zwischen dem Trägerelement und dem Sensor geschaffen werden kann.

Alternativ kann durch das Abscheiden der besagten Polymerschicht auch ohne zusätzliche Anschlusselemente eine Verbindung, insbesondere eine fluidleitende Verbindung, zwischen dem Trägerelement und dem Sensor geschaffen werden.

Nach dem Abscheiden der Polymerschicht erfolgt ein Erwärmen dieser Polymerschicht. Anschließend kann der Sensor oder die besagten Anschlusselemente an und/oder auf dem Trägerelement angeordnet werden, so dass bei einer Abkühlung eine mechanische Verbindung zwischen dem Trägerelement und dem Sensor und/oder zwischen dem Trägerelement und den Anschlusselementen und/oder zwischen den Anschlusselementen und dem Sensor erhalten werden. Im letzteren Fall sind die Anschlusselemente bereits zuvor an dem Trägerelement festgelegt.

In einem besonders bevorzugten Verfahren zum Herstellen einer mechanischen Verbindung zwischen einem Trägerelement, einem Sensor und/oder einem Anschlusselement, bei dem in einem Teilbereich des Substrats, also wahlweise des Trägerelements, des Anschlusselements oder des Sensors der fluorierte Kunststoff als Polymerschicht elektrophoretisch aufgebracht wird. Diese elektrophoretische Auftragsweise hat sich als besonders geeignet erwiesen.

Das an dem Substrat aufgebrachte Polymermaterial wird erwärmt, so dass eine Änderung einer Viskosität des Polymermaterials eintritt. Das Bauteil wird an dem erwärmten Polymermaterial angeordnet, so dass eine Oberfläche des Bauteils von dem Polymermaterial mit der geänderten Viskosität benetzt wird. Wird das Polymermaterial abgekühlt, so kann die mechanische Verbindung zwischen dem Substrat und dem Bauteil erhalten werden.

Vorteilhaft an dieser Ausführungsform ist, dass das Substrat, vorzugsweise das Trägerelement, mit dem aufgebrachtes Polymermaterial als technisches Teilprodukt transportiert werden kann, wie etwa von einem Herstellungsort des Teilprodukts zu einem Verarbeitungsort. Ferner kann die Herstellung der mechanischen Verbindung durch ein Erwärmen und ein Abkühlen erfolgen, so dass auf komplexe Klebprozesse, die eine Überwachung von Luftfeuchtigkeit und/oder Ausheilzeiten erfordern können, oder eine Beschädigung des Substrats verzichtet werden kann.

Ein möglicher Ablauf einer Ausführungsvariante eines Herstellungsverfahrens wird nachfolgend anhand des Beispiels der Herstellung einer fluidleitenden Verbindung zwischen Trägerelement und Sensor im Detail beschrieben.

In einem ersten Schritt wird ein fluorierter Kunststoff, beispielsweise Halar ECTFE, elektrophoretisch auf das Trägermaterial im Bereich einer Ausgangsöffnung des Fluidkanals des Trägerelements abgeschieden,d.h., dass zur Abscheidung des Polymermaterials an dem Substrat elektrophoretische Deposition (EPD) eingesetzt wird. Das Aufbringen kann in einer oder mehreren Lagen erfolgen. Die Dicken der einen oder mehreren Lagen können gleich oder voneinander verschieden sein, sodass eine resultierende Gesamtdicke variabel einstellbar sein kann.

Die verschiedenen Materialien können über verschiedene aufgebrachte Lagen des Polymermaterials und/oder innerhalb einer aufgebrachten Lage des Polymermaterials variieren. So kann bspw. eine an der Oberfläche des Trägerelements angeordnete Lage eine besonders gute Hafteigenschaft gegenüber dem Material des Trägerelements aufweisen und eine darauf angeordnete Lage eine gewünschte elastische Eigenschaft aufweisen. Alternativ kann das Polymermaterial in einer Lage Materialkomponenten aufweisen, welche dieser Lage bereichsweise verschiedene Eigenschaften verleihen. Dies können z.B. elektrisch-leitfähige Zuschlagstoffe sein.

Beispielsweise kann so eine spannungsführende und eine Masseverbindung durch das Polymermaterial ausgebildet sein, wobei die beiden Verbindungen voneinander durch das restliche Polymermaterial isoliert sind.

Eine Aufbringung des Polymermaterials durch EPD kann eine Reduzierung von Fehlstellen des Polymermaterials und/oder der Substratoberfläche ermöglichen. Aufgrund des großen Massestroms, welcher beim EPD einsetzbar ist, können beispielsweise Fehlstellen auf der Oberfläche des Trägerelements, wie z.B. Kratzer, ausgeheilt bzw. ausgeglichen werden, so dass leichte Unebenheiten der Substratoberfläche von einer Polymerschicht mit einer ebeneren Oberfläche bedeckt sind. In anderen Worten kann die EPD eine Kompensation von Topografieänderungen auf der Substratoberfläche ermöglichen.

Ferner erlaubt die EPD sowohl dünne als auch gleichmäßige Schichtdicken mit einem ggf. gegenüber anderen Beschichtungsverfahren reduziertem Umfang von Fehlstellen. Schichtdicken des polyfluorierten Kunststoffs sind beispielsweise in einem Bereich von 0,01 bis 300 µm realisierbar. Durch eine Kombination von Lagen können auch größere Materialdicken, beispielsweise im Millimeter-Bereich erzielt werden.
EPD ermöglicht dünne Schichtdicken unter anderem aufgrund einer guten Steuerbarkeit des elektrostatischen Beschichtungsprozesses, das heißt der elektrostatischen Felder, welche für das Abscheiden des Polymermaterials genutzt werden. Das elektrophoretisch abgeschiedene Material muss dabei nicht zwingend durch die Abscheidung von kolloidalen Partikeln gebildet sein.

Um das Polymermaterial an dem Substrat aufzubringen, kann ein elektrostatisches Feld zwischen dem Substrat bzw. einer daran oder benachbart dazu angeordneten Anode und einer korrespondierenden Kathode angelegt werden. So kann beispielsweise eine elektrisch leitfähige Komponente des Substrates die Anode bilden. Bei Anlegen einer elektrischen Spannung zwischen der Anode und der Katode kann in einem Bad, welches das in Form von Partikeln in dem Bad gelöste Polymer aufweist, eine Beschichtung des Substrates in dem Bereich der Anode mit dem Polymermaterial erfolgen. Die Partikel können kolloidal geformt sein, so dass die Ausbildung einer glatten Oberfläche des abgeschiedenen Polymers ermöglicht wird bzw. die Oberflächenrauheit oder die Anzahl von Fehlstellen in dem Polymermaterial reduziert wird.

In einem weiteren Schritt wird der fluorierte Kunststoff erwärmt, zumindest bis die Änderung der Viskosität in dem Polymermaterial eintritt. Bei einem Erreichen der jeweiligen Schmelztemperatur des Polymers kann dieses bspw. in einen flüssigen oder zähflüssigen Zustand übergehen. In anderen Worten wird das Polymermaterial aufgeschmolzen. In einer besonders bevorzugten Ausführungsvariante wird der fluorierte Kunststoff lediglich angeschmolzen, indem die Erwärmung bei Temperaturen erfolgt, die vorzugsweise weniger als 30K, besonders bevorzugt weniger als 20K über der Schmelztemperatur des fluorierten Kunststoffmaterials liegt. Dadurch bleibt die Form im Wesentlichen erhalten und die Oberfläche beginnt sich zu verflüssigen, wodurch eine Benetzung des Kunststoffmaterials auf der Sensoroberfläche gelingt.

In einem weiteren Schritt wird der Sensor an dem erwärmten fluorhaltigen Kunststoffmaterial angeordnet. Beispielsweise kann der Sensor an das Trägerelement oder umgekehrt gedrückt oder gepresst werden. Alternativ ist vorstellbar, dass eine Zugkraft genutzt wird, um das Bauteil an dem erwärmten Polymermaterial anzuordnen.

Bei einer Abkühlung des Polymermaterials, wie etwa durch eine aktive Kühlung in einer Kühl- oder Klimakammer oder durch Belassen des Polymermaterials bei Raumtemperatur kann das Polymermaterial eine erneute Änderung der Viskosität zeigen, wenn die Temperatur des Polymermaterials unterhalb der Schmelztemperatur sinkt. Das Abkühlen des Polymermaterials, bzw. die dadurch induzierte Veränderung der Viskosität führt zu der mechanischen Verbindung zwischen dem Trägerelement
und dem Sensor. Eine solche mechanische Verbindung kann das Substrat unbeschädigt lassen und eine schnelle und/oder kostengünstige Form der Verbindung ermöglichen.

Das Polymermaterial kann so gewählt sein, dass die Viskosität des Polymermaterials verglichen mit der Viskosität vor dem Erwärmen nach dem Abkühlen auf eine Ausgangstemperatur eine veränderte oder eine in etwa gleiche Viskosität aufweist. So ist vorstellbar, dass beispielsweise thermoaktive Bestandteile in dem Polymermaterial zu einer chemischen Reaktion während des Erwärmens oder des Verbindens mit dem Bauteil angeregt werden und nach einem Abkühlen des Polymermaterials eine teilweise kristalline Struktur bilden. Alternativ können zusätzliche Vernetzungsreaktionen, insbesondere Quervernetzungsreaktionen durch Zufuhr von thermischer Energie aktiviert werden.

Alternativ kann das Polymermaterial auch in etwa in seinen Ausgangszustand zurückkehren. Prinzipiell kann eine erneute Erwärmung des Polymermaterials mit einer erneuten Änderung der Viskosität möglich sein, um das Bauteil von dem Substrat zu lösen oder das Bauteil zu verschieben. Ein Lösen der Verbindung kann zum Beispiel einen Austausch eines veralteten oder defekten Sensors ermöglichen.

Nach dem Erwärmen des fluorierten Kunststoffes auf seine Schmelztemperatur kann das Copolymer weiter erwärmt, bis eine Reaktionstemperatur von Bestandteilen des Polymermaterials erreicht ist, so dass diese Bestandteile eine kristalline Struktur bilden. Eine kristalline Struktur kann zu einer mechanischen Verbindung mit einer gegenüber anderen Bestandteilen des Polymermaterials größeren Festigkeit und/oder Steifigkeit führen.

Zur Ausbildung der fluidleitenden Verbindung kann eine möglichst exakte Form oder Geometrie der Polymerschicht auf dem Substrat wünschenswert und bevorzugt sein. Wird die mechanische Verbindung in einer späteren Anwendung beispielsweise von einem Medium, wie etwa Wasser, einer anderen Flüssigkeit oder Wind, umströmt, können Vorsprünge oder Materialüberhänge zu Angriffspunkte für eine Erosion bilden. Eine definierte geometrische Strukturierung der Polymerschicht kann diese Angriffspunkte reduzieren oder verhindern und ggf. Materialeinsparungen ermöglichen. Eine angestrebte Geometrie der Polymerschicht kann beispielsweise dadurch erreicht werden, dass eine Anodenform, die für das EPD eingesetzt wird, in etwa der Oberflächenform des Bauteils, also des Sensors, welcher später an dem Trägerelement bzw. der Polymerschicht angeordnet werden soll, entspricht, so dass das Polymer bereits mit einer gewünschten oder angestrebten Genauigkeit an dem Substrat abgeschieden werden kann. Alternativ ist ebenfalls vorstellbar, dass beispielsweise eine Maske an dem Substrat angeordnet wird, bevor oder während das EPD durchgeführt wird, so dass die Maske eine Ablagerung oder Abscheidung des Polymermaterials an unerwünschten Stellen auf dem Substrat verhindert und eine strukturierte Anordnung des Polymermaterials ermöglicht. Alternativ ist ebenfalls vorstellbar, dass das Polymermaterial mit einer beliebigen oder zulässigen Ungenauigkeit an dem Substrat abgeschieden bzw. angeordnet wird und in einem nachfolgenden Prozessschritt, beispielsweise durch ein Ätzen oder Fräsen, nachbearbeitet wird, so dass eine gewünschte Geometrie der Polymerschicht an dem Trägerelement erhalten wird. In anderen Worten wird ein Teil der Polymerschicht entfernt und mithin die Polymerschicht strukturiert, so dass ein strukturierter Bereich der Substratoberfläche von dem Polymermaterial bedeckt ist.

### Bezugszeichenliste

- 14: Trägerelement
- 15: Fluidzuführkanal
- 16: Fluidabführkanal
- 17: erstes Kanalsegment
- 18: zweites Kanalsegment
- 19: Durchmesseraufweitung
- 20: Kanalverbindungssegment
- 21: Trägerelement
- 22: Mikromechanischer Sensor
- 23: Anschlusselement
- 24: Fluidzuführkanal
- 25: Fluidabführkanal
- 26: Zweites Kanalsegment
- 27: Erstes Kanalsegment
- 28: Zweites Kanalsegment
- 29: Erstes kanalsegment
- 30: Kanalverbindungssegment
- 31: Messanordnung
- 32: Trägerelement
- 33: Mikromechanischer Sensor
- 34: Fluidkanal
- 35: Anschlusselement
- 36: Fluidzuführkanal
- 37: Fluidabführkanal
- 38: Mechanische Anbindungsschicht
- 39: Mechanische Anbindungsschicht
- 40: Fluidauslass
- 41: Trägerelement
- 42: Anschlusselement
- 43: Fluidauslass
- 44: Fluideinlass
- 45: Trägerelement
- 46: Sensor
- 47: Fluidkanal
- 48: Fluidzuführkanal
- 49: Fluidabführkanal
- 50: Mechanische Anbindungsschicht
- 51: Zweites Kanalsegment
- 52: Fluidleitende Verbindung
- 53: Fluideinlass
- 54: Fluidauslass
- 55: Verbindung

## Patentansprüche

1. Messanordnung umfassend
a) ein Trägerelement (14, 21, 32, 41) mit einer Längsachse (A) auf welchem ein Sensor (22, 33), zur Ermittlung einer Prozessgröße eines gasförmigen oder flüssigen Fluids angeordnet ist, und
b) den Sensor (22, 33)
wobei der Sensor (22, 33) einen Fluidkanal (34) aufweist, welcher sich innerhalb des Sensors (22, 33) erstreckt, und
wobei das Trägerelement (14, 21, 32, 41) einen Fluidkanal (15, 24, 36) aufweist, **dadurch gekennzeichnet, dass** das Trägerelement (14, 21, 32, 41) zur Verbindung des Fluidkanals (15, 24, 36) des Trägerelements (14, 21, 32, 41) mit dem Fluidkanal (34) des Sensors (22, 33) jeweils zumindest ein Anschlusselement (23, 35, 42) aufweist, welches senkrecht zur Längsachse (A) aus dem Trägerelement (14, 21, 32, 41) hervorsteht und welches in den Fluidkanal (34) des Sensors (22, 33) hineinragt und wobei das Anschlusselement (23, 35, 42) mittels einer Anbindungsschicht (38, 39) zumindest am Sensor (22, 33) festgelegt ist, und
wobei diese mechanische Anbindungsschicht (38, 39) eine fluorierte Kunststoffverbindung aufweist.

2. Messanordnung nach Anspruch 1, **dadurch gekennzeichnet, dass** die fluorierte Kunststoffverbindung eine Copolymerverbindung mit zumindest einer polyfluoriertem Polymerkomponente ist.

3. Messanordnung nach Anspruch 2, **dadurch gekennzeichnet, dass** die Copolymerverbindung aus Chlortrifluorethylen und Ethylen besteht.

4. Messanordnung nach Anspruch 3, **dadurch gekennzeichnet, dass** die Copolymerverbindung ein 1:1 Copolymer aus Chlortrifluorethylen und Ethylen ist.

5. Messanordnung einem der vorhergehenden Ansprüche, **dadurch gekennzeichnet, dass** die Anbindungsschicht (38, 39) zumindest 80 Gew.%, vorzugsweise mehr als 90 Gew.%, der Copolymerverbindung enthält.

6. Messanordnung nach einem der vorhergehenden Ansprüche, **dadurch gekennzeichnet, dass** das Trägerelement (14, 21, 32, 41) ein Anschlusselement (23, 36, 42) zur Übertragung des Fluids vom Trägerelement (14, 21, 32, 41) in den Sensor (22, 33) aufweist, welches zumindest bereichsweise an seinem Außenumfang die Anbindungsschicht (38) aufweist.

7. Messanordnung nach Anspruch 5, **dadurch gekennzeichnet, dass** das Trägerelement (14, 21, 32, 41) und/oder das Anschlusselement (23, 35, 42) aus Metall, vorzugsweise aus Edelstahl, besonders bevorzugt aus Edelstahl der Sorte PH 17-4 besteht.

8. Messanordnung nach einem der vorhergehenden Ansprüche, **dadurch gekennzeichnet, dass** der thermische Ausdehnungskoeffizient des Materials des Trägerelements (14, 21, 32, 41) weniger als das 7-fache, vorzugsweise weniger als das 5-fache des thermischen Ausdehnungskoeffizienten des Materials des Sensors (22, 33) beträgt.

9. Messanordnung nach einem der vorhergehenden Ansprüche, **dadurch gekennzeichnet, dass** zwischen dem Sensor (22, 33) und dem Trägerelement (14, 21, 32, 41) weitere stoffschlüssige Verbindungen angeordnet sind, welche mittels der fluorierten Kunststoffverbindung ausgebildet sind.

10. Messanordnung nach einem der vorhergehenden Ansprüche, **dadurch gekennzeichnet, dass** das Anschlusselement (42) mittels eines Urformverfahrens aus dem Trägerelement (41) ausgeformt ist.

11. Messanordnung nach einem der vorhergehenden Ansprüche, **dadurch gekennzeichnet, dass** das Anschlusselement (6, 7, 23, 35) als ein rohrförmiges Bauteil ausgebildet ist, welches in dem Fluidkanal des Trägerelements (14, 21, 32) angeordnet ist.

12. Messanordnung nach einem der vorhergehenden Ansprüche, **dadurch gekennzeichnet, dass** die Anbindungsschicht aus mehreren Lagen aufgebaut ist.

13. Messanordnung nach Anspruch 12, **dadurch gekennzeichnet, dass** die einzelnen Lagen unterschiedliche Eigenschaften, insbesondere jeweils unterschiedliche elektrische Leitfähigkeiten, aufweisen.

14. Messanordnung nach einem der vorhergehenden Ansprüche, **dadurch gekennzeichnet, dass** die mechanische Anbindungsschicht eine fluidleitende Verbindung zwischen dem Fluidkanal des Sensors und dem Fluidkanal des Trägerelements aufweist.

15. Messanordnung nach einem der vorhergehenden Ansprüche, **dadurch gekennzeichnet, dass** die Anschlusselemente mit der Copolymerverbindung ausgekleidet sind.

## Claims

1. Measuring arrangement, comprising
a) a carrier element (14, 21, 32, 41) with a longitudinal axis (A) on which a sensor (22, 33) for determining a process variable of a gaseous or liquid fluid is arranged, and
b) the sensor (22, 33)
wherein the sensor (22, 33) has a fluid channel (34) which extends inside the sensor (22, 33), and
wherein the carrier element (14, 21, 32, 41) has a fluid channel (15, 24, 36), **characterized in that** the carrier element (14, 21, 32, 41) has, in each case, at least one connection element (23, 35, 42) for the purpose of connecting the fluid channel (15, 24, 36) of the carrier element (14, 21, 32, 41) with the fluid channel (34) of the sensor (22, 33), said connection element projecting out of the carrier element (14, 21, 32, 41) perpendicularly to the longitudinal axis (A) and projecting into the fluid channel (34) of the sensor (22, 33), and wherein the connection element (23, 35, 42) is fixed at least to the sensor (22, 33) with a bonding layer (38, 39), and
wherein said mechanical bonding layer (38, 39) comprises a fluorinated plastic compound.

2. Measuring arrangement as claimed in Claim 1, **characterized in that** the fluorinated plastic compound is a copolymer compound with at least one polyfluorinated polymer component.

3. Measuring arrangement as claimed in Claim 2, **characterized in that** the copolymer compound consists of chlorotrifluoroethylene and ethylene.

4. Measuring arrangement as claimed in Claim 3, **characterized in that** the copolymer compound is a 1:1 copolymer made of chlorotrifluoroethylene and ethylene.

5. Measuring arrangement as claimed in one of the previous claims, **characterized in that** the bonding layer (38, 39) contains at least 80% by weight, preferably more than 90% by weight, of the copolymer compound.

6. Measuring arrangement as claimed in one of the previous claims, **characterized in that** the carrier element (14, 21, 32, 41) has a connection element (23, 35, 42) to transmit the fluid from the carrier element (14, 21, 32, 41) to the sensor (22, 33), said connection element having the bonding layer (38) on its outer circumference at least in part.

7. Measuring arrangement as claimed in Claim 5, **characterized in that** the carrier element (14, 21, 32, 41) and/or the connection element (23, 35, 42) is/are made of metal, preferably stainless steel, most preferably stainless steel of the type PH 17-4.

8. Measuring arrangement as claimed in one of the previous claims, **characterized in that** the thermal expansion coefficient of the material of the carrier element (14, 21, 32, 41) is less than 7 times, preferably less than 5 times, the thermal expansion coefficient of the material of the sensor (22, 33).

9. Measuring arrangement as claimed in one of the previous claims, **characterized in that** additional substance-to-substance bonds are arranged between the sensor (22, 33) and the carrier element (14, 21, 32, 41), which are formed using the fluorinated plastic compound.

10. Measuring arrangement as claimed in one of the previous claims, **characterized in that** the connection element (42) is formed from the carrier element (41) using a casting technique.

11. Measuring arrangement as claimed in one of the previous claims, **characterized in that** the connection element (6, 7, 23, 35) is designed as a tubular component which is arranged in the fluid channel of the carrier element (14, 21, 32).

12. Measuring arrangement as claimed in one of the previous claims, **characterized in that** the bonding layer constitutes multiple layers.

13. Measuring arrangement as claimed in Claim 12, **characterized in that** the individual layers have different properties, particularly different electrical conductivities.

14. Measuring arrangement as claimed in one of the previous claims, **characterized in that** the mechanical bonding layer comprises a fluid-conducting connection between the fluid channel of the sensor and the fluid channel of the carrier element.

15. Measuring arrangement as claimed in one of the previous claims, **characterized in that** the connection elements are lined with the copolymer compound.

## Revendications

1. Configuration de mesure comprenant
a) un élément porteur (14, 21, 32, 41) avec un axe longitudinal (A) sur lequel est disposé un capteur (22, 33) destiné à la détermination d'une grandeur process d'un fluide gazeux ou liquide, et
b) le capteur (22, 33)
pour lequel le capteur (22, 33) comporte un passage de fluide (34), lequel passage s'étend à l'intérieur du capteur (22, 33), et
pour lequel l'élément support (14, 21, 32, 41) comporte un passage de fluide (15, 24, 36), **caractérisé en ce que** l'élément support (14, 21, 32, 41) présente pour la liaison du passage de fluide (15, 24, 36) de l'élément porteur (14, 21, 32, 41) avec le passage de fluide (34) du capteur (22, 33) respectivement au moins un élément de raccordement (23, 35, 42), lequel élément est disposé perpendiculairement à l'axe longitudinal (A) et fait saillie sur l'élément porteur (14, 21, 32, 41) et lequel élément pénètre dans le passage de fluide (34) du capteur (22, 33) et pour lequel l'élément de raccordement (23, 35, 42) est fixé au moins sur le capteur (22, 33) au moyen d'une couche de liaison (38, 39), et
pour lequel cette couche de liaison mécanique (38, 39) présente un composé plastique fluoré.

2. Configuration de mesure selon la revendication 1, **caractérisée en ce que** le composé plastique fluoré est un composé de copolymère avec au moins un composant polymère polyfluoré.

3. Configuration de mesure selon la revendication 2, **caractérisée en ce que** le composé de copolymère est constitué de chlorotrifluoroéthylène et d'éthylène.

4. Configuration de mesure selon la revendication 3, **caractérisée en ce que** le composé de copolymère est un copolymère 1:1 constitué de chlorotrifluoroéthylène et d'éthylène.

5. Configuration de mesure selon l'une des revendications précédentes, **caractérisée en ce que** la couche de liaison (38, 39) contient au moins un pourcentage pondéral de 80 %, de préférence un pourcentage pondéral de plus de 90 % du composé de copolymère.

6. Configuration de mesure selon l'une des revendications précédentes, **caractérisée en ce que** l'élément porteur (14, 21, 32, 41) présente un élément de raccordement (23, 35, 42) destiné à la transmission du fluide depuis l'élément porteur (14, 21, 32, 41) dans le capteur (22, 33), lequel élément de raccordement comporte au moins partiellement, sur son périmètre extérieur, la couche de liaison (38).

7. Configuration de mesure selon la revendication 5, **caractérisée en ce que** l'élément porteur (14, 21, 32, 41) et/ou l'élément de raccordement (23, 35, 42) est/sont en métal, de préférence en acier inoxydable, particulièrement de préférence en acier inoxydable de la nuance PH 17-4.

8. Configuration de mesure selon l'une des revendications précédentes, **caractérisée en ce que** le coefficient de dilatation thermique du matériau de l'élément porteur (14, 21, 32, 41) est inférieur à 7 fois, de préférence inférieur à 5 fois, le coefficient de dilatation thermique du matériau du capteur (22, 33).

9. Configuration de mesure selon l'une des revendications précédentes, **caractérisée en ce que** sont disposés, entre le capteur (22, 33) et l'élément porteur (14, 21, 32, 41), d'autres assemblages par liaison de matière, qui sont constitués au moyen du composé plastique fluoré.

10. Configuration de mesure selon l'une des revendications précédentes, **caractérisée en ce que** l'élément de raccordement (42) est formé au moyen d'un procédé de formage initial à partir de l'élément support (41).

11. Configuration de mesure selon l'une des revendications précédentes, **caractérisée en ce que** l'élément de raccordement (6, 7, 23, 35) est conçu en tant que composant tubulaire, lequel composant est disposé dans le passage de fluide de l'élément support (14, 21, 32).

12. Configuration de mesure selon l'une des revendications précédentes, **caractérisée en ce que** la couche de liaison est constituée de plusieurs couches.

13. Configuration de mesure selon la revendication 12, **caractérisée en ce que** les couches individuelles présentent des propriétés différentes, notamment des conductivités électriques différentes.

14. Configuration de mesure selon l'une des revendications précédentes, **caractérisée en ce que** la couche de liaison mécanique présente une liaison conductrice de fluide entre le passage de fluide du capteur et le passage de fluide de l'élément support.

15. Configuration de mesure selon l'une des revendications précédentes, **caractérisée en ce que** les éléments de raccordement sont revêtus du composé de copolymère.
